# EUROPÄISCHE PATENTSCHRIFT

(11) **EP 2 077 199 B1**
(45) Veröffentlichungstag und Bekanntmachung des Hinweises auf die Patenterteilung: **12.09.2012**
(21) Anmeldenummer: 09150050.4
(22) Anmeldetag: 05.01.2009
(51) Int. Cl.: B60J 7/22

(54) **Windschotteinrichtung mit synchronisiertem Doppelgelenk**
Wind block device with synchronised double joint
Dispositif pare-vent doté d'un joint double synchronisé

(30) Priorität: 04.01.2008 DE 102008000005
(43) Veröffentlichungstag der Anmeldung: 08.07.2009
(73) Patentinhaber: FKT GmbH, 85104 Pförring (DE); Körber, Stefan, 85092 Kösching (DE)
(72) Erfinder: Ortel, Andreas, 92334, Berching (DE); Körber, Stefan, 85092, Kösching (DE)
(74) Vertreter: Schlief, Thomas P.

(56) Entgegenhaltungen:
- EP-A- 1 612 078
- DE-A1-102004 061 758
- DE-A1-102006 030 076

## Beschreibung

Die vorliegende Erfindung betrifft eine Windschottschotteinrichtung für ein Personenkraftfahrzeug nach dem Oberbegriff des Anspruchs 1. Mittels einer solchen Ausgestaltung ist die Windschotteinrichtung aus einer zweifach gefalteten Aufbewahrposition in eine Gebrauchsposition und zurück klappbar.

Eine derartige Windschotteinrichtung ist aus der DE 100 53 701 A1 bekannt. Die Windschotteinrichtung besteht aus einer in Gebrauchsposition oberhalb der Rücksitze angeordneten Abdeckung mit einem Abdeckungsrahmen sowie einem schwenkbeweglich mit dem Abdeckungsrahmen verbundenen Windschottrahmen eines Windschotts, welches sich in Gebrauchsposition direkt hinter den Lehnen der Vordersitze befindet. Der Abdeckungs- wie auch der Windschottrahmen sind wiederum in Teilrahmen unterteilt, welche ebenfalls jeweils schwenkbeweglich miteinander verbunden sind. Die Klappachse der Teilrahmen verläuft hierbei senkrecht zur Schwenkachse des Windschottrahmens und des Abdeckungsrahmens. Die Windschotteinrichtung kann nach einem ersten Falten, wobei der Windschottrahmen gegen die Abdeckung geklappt wird, durch ein zweites Falten auf die Hälfte ihrer Breite zusammengeklappt werden. Um nach dem ersten Falten des Windschottrahmens auf den Abdeckungsrahmen die jeweiligen Teilrahmen des Windschotts bzw. der Abdeckung aufeinander klappen zu können, muss jedoch eine Verbindung zwischen dem Windschottrahmen und dem Abdeckungsrahmen gelöst werden, so dass diese nur noch über die Hälfte ihrer gesamten Breite miteinander verbunden sind. Erst nachdem diese Verriegelung gelöst ist, können die beiden Teilrahmen des Windschotts bzw. die beiden Teilrahmen der Abdeckung aufeinander geklappt werden.

Weiterhin ist es bekannt, zwei Teilrahmen einer Windschotteinrichtung mit einem Doppelgelenk zu verbinden, so dass zwischen den voneinander beabstandeten Achsen des Doppelgelenks zuvor bereits eingeklappte Teile der Windschotteinrichtung zu liegen kommen und somit die Windschotteinrichtung durch zweifaches Falten aus der Gebrauchsposition in eine Aufbewahrposition geklappt werden kann. Um ein gleichzeitiges Einklappen der jeweiligen Teilrahmen des Abdeckungsrahmens sowie des Windschottrahmens zu ermöglichen, schlägt die DE 10 2004 061 758 A1 vor, ein Dreigelenk zwischen den Teilrahmen des Windschottrahmens und des Abdeckungsrahmens anzuordnen.

Beim Zusammenklappen der Windschotteinrichtung auf die Hälfte seiner Breite kann es bedingt durch das Doppelgelenk vorkommen, dass Teile, die sich an den Innenflächen der aufeinander zu klappenden Rahmen befinden, verkanten und ein weiteres Einklappen behindern. Die Handhabung der Windschotteinrichtung ist hierdurch erschwert. Außerdem kann sich im zusammengeklappten Zustand eine unschöne, ungleichmäßige Optik ergeben.

Aufgabe der vorliegenden Erfindung ist es, eine Windschotteinrichtung mit einem Doppelgelenk vorzuschlagen, welche komfortabel handhabbar ist und Probleme beim Einklappen vermeidet.

Die Aufgabe wird gelöst mit den Merkmalen des Anspruchs 1.

Eine Windschotteinrichtung für ein Personenkraftfahrzeug weist einen Windschottrahmen und einen Abdeckungsrahmen auf, welche über mindestens ein Drehgelenk miteinander verbunden sind. Der Windschottrahmen und der Abdeckungsrahmen sind hierdurch um eine in Gebrauchsstellung quer zur Fahrtrichtung des Personenkraftfahrzeuges liegende Schwenkachse gegeneinander verschwenkbar. Der Windschottrahmen und der Abdeckungsrahmen bestehen jeweils aus mindestens zwei Teilrahmen, die jeweils durch ein weiteres Drehgelenk miteinander verbunden sind.

Mindestens eines der Drehgelenke ist als Doppelgelenk mit zwei beweglichen Schenkeln und einem Verbindungselement zur Lagerung des Doppelgelenks ausgebildet, so dass die Windschotteinrichtung aus einer zweifach gefalteten Aufbewahrposition in eine Gebrauchsposition und zurückklappbar ist. Erfindungsgemäß weist das Doppelgelenk eine Synchronisiereinrichtung bzw. Mitnahmeeinrichtung auf. Hierdurch werden die beiden beweglichen Schenkel des Doppelgelenks bzw. die damit verbundenen Rahmenteile synchron relativ zum vorzugsweise stehenden Verbindungselement verschwenkt, so dass die beweglichen Schenkel gegenüber dem Verbindungselement beim Zusammenklappen stets den jeweils gleichen Drehwinkel aufweisen. Der Begriff Mitnahmeeinrichtung bedeutet hierbei, dass durch das Verschwenken des einen Schenkels der andere automatisch und synchron mitgenommen wird. In zusammengeklapptem Zustand einander gegenüberliegende Bauteile können daher während des Zusammenklappens nicht mehr verkanten, da sie stets an die vorgesehene Position geführt werden. Ebenso kann das Einklappen des zweiten Schenkels nicht mehr durch einen bereits zu weit eingeklappten ersten Schenkel behindert werden.

Bei einem herkömmlichen Doppelgelenk des Standes der Technik kam es hingegen vor, dass nach dem Einklappen eines ersten Teilrahmens um die erste Achse des Doppelgelenks das Einklappen des zweiten Teilrahmens um die von der ersten Achse beabstandet liegende zweite Achse des Doppelgelenks durch den bereits umgeklappten ersten Teilrahmen behindert wurde.

Die erfindungsgemäße Windschotteinrichtung ist mittels der erfindungsgemäßen Synchronisiereinrichtung besonders komfortabel handhabbar. Insbesondere wird auch die Einhandbedienung erleichtert, da das Einschwenken des ersten beweglichen Schenkels automatisch das synchrone Einschwenken des zweiten beweglichen Schenkels bewirkt.

Nach einer ersten Ausführung der Erfindung sind die beweglichen Schenkel des Doppelgelenks direkt miteinander verzahnt. Wird der erste Schenkel bzw. der mit ihm verbundene Rahmen um einen bestimmten Drehwinkel relativ zum stehenden Verbindungselement verschwenkt, wird hierdurch automatisch auch der zweite Schenkel um denselben Drehwinkel verschwenkt. Die Verzahnung kann hierbei direkt jeweils an den beweglichen Schenkeln des Doppelgelenks ausgebildet sein oder an einem Zahnrad angeordnet sein, welches in der Drehachse des beweglichen Schenkels, jedoch axial versetzt an dem beweglichen Schenkel angeordnet ist.

Eine andere Ausführung der Erfindung sieht vor, dass die beweglichen Schenkel des Doppelgelenks über miteinander verzahnte Zahnräder, insbesondere zwei Stück, miteinander verbunden sind. Links und rechts dieser Zahnräder sind die endseitigen Abschnitte der Schenkel mit entsprechenden Zahnabschnitten angeordnet, die mit jeweils einem der Zahnräder in Eingriff stehen. Durch die Zwischenschaltung von separat gelagerten Zahnrädern zwischen den Schenkeln ist es in vorteilhafter Weise möglich, den Abstand zwischen den beiden Drehachsen des Doppelgelenks zu vergrößern bzw. den Erfordernissen entsprechend anzupassen. Um einen größeren Abstand zwischen den beiden Drehachsen zu realisieren, ist es auch möglich, beispielsweise vier Zahnräder zwischen den beiden Schenkeln vorzusehen. Durch den Formschluss ist in jedem Falle eine synchrone Bewegung der beiden Schenkel gewährleistet.

Eine besonders vorteilhafte Ausführung der Erfindung sieht vor, dass die Teilrahmen des Windschottrahmens durch mindestens ein Doppelgelenk verbunden sind. Der komplette Windschottrahmen des Windschotts kann mittels eines einfachen Drehgelenks in im Fahrzeug eingebauten Zustand um die sich quer zur Fahrtrichtung erstreckende Schwenkachse gegen den Abdeckungsrahmen geschwenkt werden. Nach dem Ausbauen des Windschotts aus dem Fahrzeug können dann durch ein zweites Falten die Teilrahmen des Windschottrahmens (mittels des erfindungsgemäßen Doppelgelenks mit Synchronisiereinrichtung bzw. Mitnahmeeinrichtung) und des Abdeckungsrahmens (mittels einfachem Drehgelenk) zeitgleich gegeneinander geklappt werden, so dass die Windschotteinrichtung nur noch die Hälfte der Fahrzeugbreite einnimmt. Die Teilrahmen des Windschottrahmens bilden hierbei die Außenseiten der zweifach gefalteten Windschotteinrichtung. Alternativ können jedoch auch die Teilrahmen des Abdeckungsrahmens durch ein Doppelgelenk verbunden sein, so dass nach zweifachem Zusammenklappen die beiden Teilrahmen des Abdeckungsrahmens die Außenseiten der vollständig gefalteten Windschotteinrichtung bilden.

Eine andere Ausführungsform der Erfindung sieht vor, dass Windschottrahmen und Abdeckungsrahmen durch mindestens ein Doppelgelenk verbunden sind. Um hierbei ein Einklappen des Windschottrahmens gegen den Abdeckungsrahmen auch in im Fahrzeug montieren Zustand realisieren zu können, sind Windschottrahmen und Abdeckungsrahmen vorzugsweise nur über die Hälfte der gesamten Fahrzeugbreite fest durch ein Gelenk verbunden, während die Verbindung bzw. das Gelenk auf der anderen Seite lösbar ausgebildet ist. In Gebrauchsposition im ins Fahrzeug montierten Zustand kann hierdurch der Windschottrahmen ebenso wie vorbeschrieben nach unten auf den Abdeckungsrahmen geschwenkt werden. Zum Zusammenklappen des Windschotts in Aufbewahrposition ist zunächst die Verbindung zwischen Windschottrahmen und Abdeckungsrahmen auf einer Seite zu lösen und die Teilrahmen des Windschottrahmens bzw. Abdeckungsrahmens sind aufeinander zu klappen, bevor schließlich Ober- und Abdeckungsrahmen durch das Doppelgelenk aufeinander geklappt werden können.

Gemäß einer vorteilhaften Ausführung der Erfindung sind die beweglichen Schenkel des Doppelgelenks einteilig an den Rahmen angeformt. Die Montage der Windschotteinrichtung kann hierdurch besonders einfach ausgeführt werden.

Gemäß einer anderen Ausführung der Erfindung sind die beweglichen Schenkel vorteilhaft durch Befestigungselemente mit dem Rahmen verbunden. Eine derartige Ausführung ist insbesondere dann vorteilhaft, wenn einzelne Rahmenelemente für verschiedene Teilrahmen verwendet werden sollen, jedoch nur an bestimmten Stellen ein Doppelgelenk vorgesehen ist. Die einzelnen Rahmenteile können hierdurch kostengünstig in größerer Stückzahl gefertigt werden. Um die Rahmenteile mit einem Doppelgelenk zu versehen, können die beweglichen Schenkel beispielsweise an die Rahmenteile angeschraubt, angenietet, verklebt und/oder verschweißt werden.

Eine weitere vorteilhafte Ausführungsform der Erfindung sieht vor, dass das Doppelgelenk durch eine Schalenanordnung verdeckt ist. Die Schalenanordnung schützt das Gelenk sowie die Synchronisiereinrichtung bzw. Mitnahmeeinrichtung vor Verschmutzung oder sich festklemmenden Teilen. Daneben kann die Schalenanordnung vorteilhaft dem Design des Windschotts bzw. des gesamten Fahrzeuges angepasst werden.

Insbesondere ist es vorteilhaft, wenn die Schalenanordnung zweiteilig mit einer Oberschale und einer Unterschale ausgebildet ist, da die Montage hierdurch in einfacher Weise erfolgen kann. Es ist jedoch auch möglich, dass beispielsweise das Verbindungselement des Doppelgelenks zugleich als Unterschale der Schalenanordnung ausgebildet ist. Die Herstellung einer derartigen Windschotteinrichtung ist hierdurch weiter vereinfacht.

Eine besonders vorteilhafte Weiterbildung der Erfindung sieht vor, dass die Windschotteinrichtung und/oder das Doppelgelenk eine Halte- oder Verriegelungseinrichtung umfasst, welche in Gebrauchsposition die Rahmen relativ zueinander fixiert. Diese kann in bekannter Weise durch Verriegelungselemente, welche an einem der Rahmen, vorteilhafterweise dem Abdeckungsrahmen, angeordnet sind, gebildet sein. Jedoch kann eine derartige Verriegelungsvorrichtung auch in einem Gelenk angeordnet sein.

Eine vorteilhafte Weiterbildung der Erfindung sieht vor, dass das Doppelgelenk eine Halte- oder Rasteinrichtung zumindest für die Gebrauchsposition des Windschotts aufweist. In bevorzugter Ausführung der Erfindung rastet diese beim Ausklappen des Windschotts in Gebrauchsstellung vorzugsweise selbsttätig ein und fixiert die Rahmen hierdurch zueinander, ohne dass hierzu eine Verriegelungseinrichtung betätigt werden müsste. Ist das Doppelgelenk im Bereich des Windschottrahmens angeordnet, kann durch eine derartige Rasteinrichtung ein unerwünschtes Einklappen des Windschotts in Gebrauchsposition durch Windkräfte verhindert werden.

Vorzugsweise umfasst die Halte- oder Rasteinrichtung eine Feder, welche auf beide beweglichen Schenkeln des Doppelgelenks wirkt. Die Feder kann derart zwischen den beweglichen Schenkeln angeordnet sein, dass die Schenkel und damit die daran befestigten Rahmen sowohl beim Auf- als auch beim Einklappen gegen die Federkraft bewegt werden müssen. Nach dem jeweiligen Überwinden einer Maximalkraft gegen die Federkraft rasten die Schenkel vorteilhafterweise in der auf- und/oder eingeklappten Position ein.

Eine vorteilhafte Ausführungsform der Erfindung sieht vor, dass die Feder als Blattfeder ausgebildet ist, von denen zumindest ein Abschnitt und vorzugsweise beide Enden in Gebrauchsposition formschlüssig in einer Ausnehmung der Schenkel oder anderer Drehelemente der Synchronisiereinrichtung (beispielsweise einer Ausnehmung zwischen den Zähnen der vorgenannten Zahnräder) aufgenommen sind. Bei Einrasten mit ihren beiden Enden in Ausnehmungen der Schenkel kann die Blattfeder somit in Gebrauchsposition wie eine Klammer wirken, welche die Schenkel des Doppelgelenks direkt zusammenhält und somit ein Einklappen verhindert. Prinzipiell reicht die Blockierung eines einzigen Drehelements der Synchronisiereinrichtung.

Vorzugsweise sind die Ausnehmung und/oder der oder die Rastabschnitte der Blattfeder derart geformt, dass beim Einklappen der Schenkel die Rastabschnitte der Blattfeder aus ihrer Rastposition geraten. Zum Einklappen der Schenkel ist hierbei zunächst eine vergleichsweise hohe Kraft aufzubringen, um den Formschluss der Blattfeder mit den besagten Ausnehmungen aufzuheben. Ist diese maximale Kraft aufgebracht, können die Schenkel in einfacher Weise eingeklappt werden.

Besonders vorteilhaft ist es, wenn die Rasteinrichtung durch eine Betätigungseinrichtung aus ihrer Rastposition abhebbar ist, um ein leichteres Einklappen des zugehörigen Rahmens zu ermöglichen. Im Falle einer Blattfeder, die mit ihren Enden mit den Schenkeln verrasten, kann diese aus ihrer Rastposition abgehoben werden, indem die Betätigungseinrichtung den Formschluss zwischen der Blattfeder und den beweglichen Schenkeln des Doppelgelenks aufhebt, so dass zum Einklappen der Schenkel keine hohen Kräfte nötig sind. Die Betätigungseinrichtung ist hierbei derart ausgeführt, dass eine zufällige Betätigung durch Windkräfte ausgeschlossen ist. Vielmehr ist bevorzugt ein Mechanismus vorhanden, der nur ein beabsichtigtes Lösen der Verrastung bewirkt.

Eine vorteilhafte dementsprechende Ausführungsform sieht vor, dass als Betätigungseinrichtung mindestens ein Stift an einem Rahmen angeordnet ist, welcher beim ersten Falten der Windschotteinrichtung die Rasteinrichtung aus ihrer Rastposition abhebt. Beim ersten Falten der Windschotteinrichtung gerät der mindestens eine Stift in den Bereich der Blattfeder des Doppelgelenks und hebt diese aus ihrer Rastposition ab. Zum weiteren Zusammenklappen bzw. zweiten Falten ist daher kein erhöhter Kraftaufwand nötig, so dass ein derartiges Windschott besonders komfortabel zusammenzufalten ist.

Der mindestens eine Stift ist vorteilhafterweise mit einer weiteren Feder federbelastet. Diese Ausführung bietet sich an, wenn der mindestens eine Stift im Bereich des erfindungsgemäßen Doppelgelenks angeordnet ist und durch das erste Falten entgegen der Federkraft der weiteren Feder gegen die Blattfeder geschoben wird und diese abhebt. Danach kann das freigegebene Doppelgelenk leicht verschwenkt werden.

Alternativ kann mindestens ein Stift, der in diesem Fall keine Federbelastung aufweist, am gegenüberliegenden Rahmen angeordnet sein, der auf den Rahmen mit dem Doppelgelenk gefaltet wird. Der mindestens eine Stift wird hierbei ebenfalls an den Zahnabschnitten vorbeigeführt und kann auf die Blattfeder wirken.

Gemäß einer weiteren Alternative kann die Halte- oder die Rasteinrichtung eine abhebbare Klinke umfassen, die in Gebrauchsstellung der Windschotteinrichtung in eine Ausnehmung mindestens eines der Schenkel oder der Zahnräder eingreift. Die Klinke ist vorzugsweise ebenfalls federbelastet, wobei beim ersten Falten der Windschotteinrichtung (insbesondere dem Falten des Windschottrahmens auf den Abdeckungsrahmen) die Klinke entgegen der Federkraft aus ihrer Raststellung gehoben wird. Weiterhin und vorteilhafterweise kann die Klinke zwei Klinkenarme aufweisen, die jeweils in eine besagte Ausnehmung eingreifen, um die Rastwirkung zu erhöhen.

Weitere Vorteile der Erfindung werden anhand der nachfolgend dargestellten Ausführungsbeispiele beschrieben. Es zeigen:
- **Figur 1**: eine Windschotteinrichtung für ein Personenkraftfahrzeug in einer perspektivischen Darstellung in Gebrauchsposition im in ein Fahrzeug montierten Zustand;
- **Figur 2**: einen Ausschnitt einer erfindungsgemäßen Windschotteinrichtung mit einem Doppelgelenk in Aufbewahrposition;
- **Figur 3**: eine geschnittene Draufsicht auf das Doppelgelenk gemäß der Figur 2 in Gebrauchsstellung;
- **Figur 4**: eine weitere Ausführungsform eines Doppelgelenks in längsgeschnittener Seitenansicht;
- **Figur 5**: eine geschnittene Draufsicht auf das Doppelgelenk gemäß der Figur 4 ohne Rasteinrichtung;
- **Figur 6**: eine geschnittene Draufsicht auf das Doppelgelenk gemäß der Figur 4 mit Rasteinrichtung;
- **Figur 7**: eine Draufsicht auf eine Windschotteinrichtung mit einer Rasteinrichtung und einer Betätigungseinrichtung für die Rasteinrichtung;
- **Figur 8a, 8b**: eine schematische Detaildarstellung einer weiteren Betätigungseinrichtung;
- **Figur 9a, 9b**: eine schematische Detaildarstellung einer alternativen Betätigungseinrichtung, und
- **Figur 10**: Doppelgelenk mit einer alternativen Halteeinrichtung.

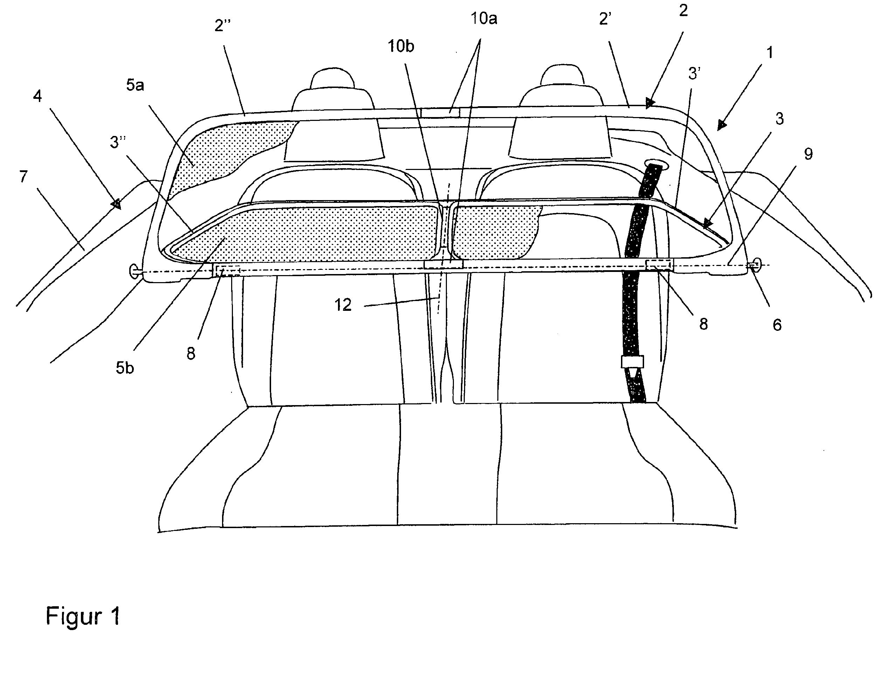

Figur 1 zeigt eine erfindungsgemäße Windschotteinrichtung 1 für ein Personenkraftfahrzeug 4 in Gebrauchsposition, wobei die Windschotteinrichtung 1 im Fahrzeug montiert ist. Die Windschotteinrichtung 1 weist einen Windschottrahmen 2 sowie einen Abdeckungsrahmen 3 auf. In der hier gezeigten Gebrauchsposition erstreckt sich der Windschottrahmen 2 der Windschotteinrichtung 1 senkrecht hinter den hier nicht dargestellten Kopfstützen der Vordersitze, während der Abdeckungsrahmen 3 sich parallel zu einer Gürtellinie 7 des Fahrzeuges 4 erstreckt. Der Abdeckungsrahmen 3 weist an seinen beiden den Seitenverkleidungen des Fahrzeugs zugewandten Seiten beispielsweise stiftartige Fixiereinrichtungen 6 auf, die in bekannter Weise mit Aufnahmen bzw. Öffnungen am Fahrzeug gekoppelt werden können, um die Windschotteinrichtung 1 sicher in Gebrauchsposition zu halten.

In dem Windschottrahmen 2 sowie in dem Abdeckungsrahmen 3 ist jeweils eine Flachmaterialbahn 5a bzw. 5b aufgespannt, welche nur teilweise dargestellt ist. Die Flachmaterialbahn 5a dient als Windstopper für die Personen auf den Vordersitzen, die Flachmaterialbahn 5b ist eine Abdeckung für den Raum über den Rücksitzen des Fahrzeuges 4 und hilft, Verwirbelungen zu vermeiden. Auch soll die Windschotteinrichtung 1 die durch den Fahrtwind entstehende Geräuschentwicklung reduzieren.

Der Windschottrahmen 2 und der Abdeckungsrahmen 3 sind über mindestens ein einfaches Drehgelenk 8 mit nur einer Achse 9 schwenkbar miteinander verbunden. Nach vorliegender Darstellung sind zur Verbindung von Windschottrahmen 2 und Abdeckungsrahmen 3 zwei Drehgelenke 8, welche hier nur schematisch angedeutet sind, vorgesehen. Es ist jedoch ebenso möglich, beide mittels nur eines Gelenks 8 zu verbinden. Der Windschottrahmen 2 der Windschotteinrichtung 1 kann hierdurch auch in im Fahrzeug 4 montierten Zustand um die Schwenkachse 9, welche sich quer zur Fahrtrichtung erstreckt, gegen den Abdeckungsrahmen 3 geklappt werden.

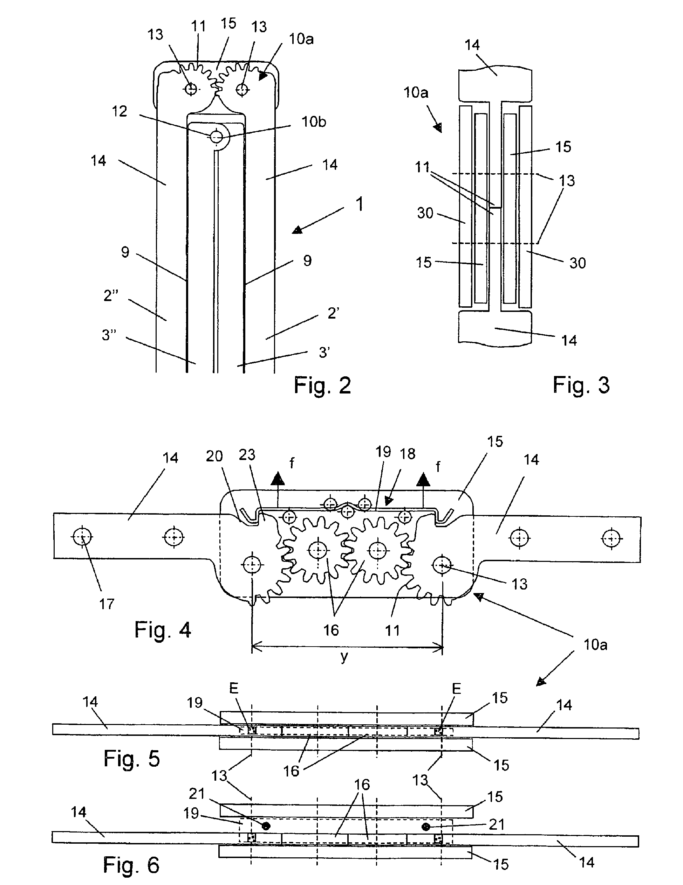

Der Abdeckungsrahmen 3 besteht vorliegend aus zwei Teilrahmen 3' und 3", welche durch mindestens ein weiteres einfaches Drehgelenk 10b miteinander verbunden sind. Der Windschottrahmen 2 besteht ebenfalls aus zwei Teilrahmen 2' und 2", welche vorliegend durch zwei Doppelgelenke 10a mit jeweils zwei Drehachsen 13 miteinander klappbar verbunden sind. Hierdurch kann das Windschott 1, nachdem der Windschottrahmen 2 um die Schwenkachse 9 auf den Abdeckungsrahmen 3 geklappt ist, durch ein weiteres Zusammenfalten um die Klappachse 12 des Abdeckungsrahmens 3 bzw. die beiden nur wenig voneinander beabstandet liegenden Klappachsen 13 des Windschottrahmens 2 zusammengeklappt werden, wie in Fig. 2 dargestellt. In der zweifach gefalteten Aufbewahrposition nimmt die Windschotteinrichtung 1 nur noch die Hälfte seiner Breite im Vergleich zur Gebrauchsposition ein.

Sind die Doppelgelenke 10a wie vorliegend gezeigt an dem Windschottrahmen 2 angeordnet, ist die Windschotteinrichtung 1 besonders gut zu handhaben. Es sind jedoch auch eine Vielzahl weiterer - hier nicht dargestellter - Ausgestaltungen möglich. So können beispielsweise die Doppelgelenke 10a auch an dem Abdeckungsrahmen 3 angeordnet sein, während die Teilrahmen 2', 2" des Windschottrahmens 2 lediglich durch einfache Drehgelenke 8 verbunden sind. Weiterhin ist es möglich, auch den Windschottrahmen 2 durch zwei vollständig umlaufende Teilrahmen 2 , 2" zu bilden, welche nur mittig mittels eines einzigen Drehgelenks 8 verbunden sind. Entsprechend kann auch nur ein Doppelgelenk 10a mittig zwischen zwei Teilrahmen 2', 2", 3', 3" angeordnet sein. Weiterhin ist es auch möglich, ein oder auch mehrere Doppelgelenke 10a zwischen dem Windschottrahmen 2 und dem Abdeckungsrahmen 3 anzuordnen, so dass die Teilrahmen 2', 2" des Windschottrahmens 2 und die Teilrahmen 3', 3" des Abdeckungsrahmens 3 mittels eines einfachen Drehgelenks 8 aufeinander geklappt werden können. Anschließend können die bereits eingeklappten Windschottrahmen 2 bzw. Abdeckungsrahmen 3 um das Doppelgelenk 10a jeweils aufeinander geklappt werden. Bevorzugt ist hierbei ein Doppelgelenk 10a nur auf einer Seite zwischen Windschottrahmen 2 und Abdeckungsrahmen 3 angeordnet, während auf der anderen Seite eine lösbare Verbindung zwischen Windschottrahmen 2 und Abdeckungsrahmen 3 vorgesehen ist, welche ein Schwenken des Windschottrahmens 2 gegen den Abdeckungsrahmen 3 in im Fahrzeug 4 montierten Zustand ermöglicht.

Figur 2 zeigt einen Ausschnitt einer erfindungsgemäßen Windschotteinrichtung 1 mit einem erfindungsgemäß synchronisierten Doppelgelenk 10a in einer ersten Ausführung. Die Windschotteinrichtung 1 ist in ihrer zweifach gefalteten Aufbewahrposition dargestellt. Der Windschottrahmen 2 und der Abdeckungsrahmen 3 sind hierbei wie zuvor beschrieben über nicht dargestellte einfache Drehgelenke 8 schwenkbar miteinander verbunden, so dass der Windschottrahmen 2 gegen den Abdeckungsrahmen 3 um die Schwenkachse 9 geklappt werden kann. Nach diesem ersten Falten kann schließlich die Windschotteinrichtung 1 durch ein zweites Falten in seine Aufbewahrposition gebracht werden, was durch die Anordnung eines Doppelgelenks 10a zwischen den jeweiligen Teilrahmen 2' und 2" des Windschottrahmens 2 sowie eines weiteren Drehgelenks 10b zwischen den Teilrahmen 3' und 3" des Abdeckungsrahmens 3 ermöglicht wird.

Nach der in Figur 2 dargestellten Ausführung des Doppelgelenks 10a sind die beweglichen Schenkel 14 des Gelenks 10a direkt über schenkelendseitige Zahnabschnitte 11 miteinander verzahnt. Das Doppelgelenk 10a weist zwei Drehachsen, nämlich die Klappachsen 13 auf, wobei die beweglichen Schenkel 14 gegen das gemeinsame Verbindungselement 15 geschwenkt werden können, in dem die beiden Drehachsen 13 lagern. Das Verbindungselement 15 besteht vorteilhafterweise aus zwei Stahlplatten, welche zu beiden Seiten der Schenkel 14 angeordnet sind (s. Figur 3) und diese mittels Achsstiften schwenkbar um die Achsen 13 lagern.

Die Synchronisiereinrichtung bzw. Mitnahmeeinrichtung wird bei vorliegender Ausführung durch die direkte Verzahnung der beweglichen Schenkel 14 des Doppelgelenks 10a gebildet. Hierdurch wird erreicht, dass bei Bewegung eines Schenkels 14 automatisch der andere Schenkel 14 ebenfalls um den gleichen Drehwinkel bewegt wird. Verkantungen von Teilen der Windschotteinrichtung 1 beim Zusammenklappen können hierdurch vermieden werden. Weiterhin ist die Bedienung erheblich erleichtert, da bedingt durch die Synchronisiereinrichtung diese auch einhändig erfolgen kann.

In der geschnittenen Draufsicht gemäß der Figur 3 sind auf die beiden als Verbindungselement 15 ausgebildeten Stahlplatten zwei Schalen 30 aufgesetzt und geeignet befestigt, um die Optik zu verbessern und das Doppelgelenk 10a zu schützen.

Nach vorliegender Darstellung gemäß der Figuren 2 und 3 sind die Schenkel 14 des Gelenks 10a einteilig an die Teilrahmen 2' und 2" des Windschottrahmens 2 angeformt. Es sind aber auch beispielsweise Steckkonstruktionen möglich, wobei die Schenkel mit Teilen des Rahmens oder mit Zwischenstücken verbunden werden.

Eine andere Ausführung eines erfindungsgemäßen Doppelgelenks 10a zeigt Figur 4. Hierbei sind die beweglichen Schenkel 14 des Doppelgelenks 10a über separat gelagerte Zahnräder 16 miteinander verbunden, wodurch ebenfalls eine synchrone Bewegung der beiden Schenkel 14 erreicht wird. Durch die Zwischenschaltung von Zahnrädern 16 zwischen die endseitig mit Zahnabschnitten 11 versehenen Schenkel 14 des Doppelgelenks 10a ist es in günstiger Weise möglich, den Abstand y zwischen den beiden Klappachsen 13 des Doppelgelenks 10a variabler und bei geringem Platzbedarf einzustellen. Der Abstand y kann somit genau auf die Abmessungen der Rahmen 2' und 2", 3' und 3" der Windschotteinrichtung 1 angepasst werden. Die Zahnräder 16 sowie die Schenkel 14 sind hierbei auf dem gemeinsamen Verbindungselement 15 gelagert, das hier wiederum in Form von zwei Stahlplatten vorgesehen ist, s. auch Figuren 5 und 6.

An den beweglichen Schenkeln 14 des Doppelgelenks 10a sind Befestigungsbohrungen 17 vorgesehen, so dass diese mittels entsprechender Verbindungselemente (hier nicht dargestellt) mit Teilen der Rahmen 2' und 2" der Windschotteinrichtung 1 verbunden werden können. Alternativ oder zusätzlich können die Schenkel mit anderen Rahmenteilen verschweißt, vernietet und/oder verklebt werden.

Das Doppelgelenk 10a weist weiterhin eine Rasteinrichtung 18 für die Gebrauchsposition der Windschotteinrichtung 1 auf. Vorliegend umfasst die Rasteinrichtung 18 eine Blattfeder 19, wobei die Enden der Blattfeder 19 in der in Figur 4 dargestellten ausgeklappten Gebrauchsposition der Windschotteinrichtung 1 formschlüssig mit den Schenkeln 14 verbunden sind. Die Enden der Blattfeder 19 sind derart geformt, dass sie in Gebrauchsposition in entsprechenden Ausnehmungen 20 der Schenkel 14 formschlüssig gehalten sind. Die Blattfeder 19, deren Enden vor den jeweiligen Ausnehmungen 20 über eine Rastnase 23 geführt sind, bildet hierdurch eine Art Klammer für die Schenkel 14, welche verhindert, dass diese in Gebrauchsposition beispielsweise durch Fahrtwind unbeabsichtigt einschwenken. Das Einschwenken der Schenkel 14 ist somit nur unter hohem Kraftaufwand entgegen der Federkraft der Blattfeder 19 möglich, deren Enden die jeweiligen Rastnasen 23 überwinden müssen.

In der Figur 5 ist das Doppelgelenk der Figur 4 in Draufsicht dargestellt. Das Abheben der Federenden der gestrichelt dargestellten Blattfeder 19 erfolgt an den mit dem Buchstaben E markierten Stellen beim Falten des Windschottrahmens 2 auf den Abdeckungsrahmen 3.

Bei der Ausführungsform gemäß der Figur 6 (hier sind ebenso wie bei der Figur 5 keine Schalen 30 dargestellt) ragt die Blattfeder 19 gegenüber der Ausführungsform der Figur 5 an einer Seite über die Schenkel 14 und die Zahnräder 14 hinaus, so dass auf die überragenden Abschnitte eine Kraft ausgeübt werden kann, die vorliegend durch zwei senkrecht zur Blattebene verlaufende Stifte bzw. Vorsprünge 21 (als ausgefüllte Kreise dargestellt) ausgeübt werden kann. Beim Einklappen der Schenkel 14 des Windschottrahmens 2 werden die beiden Enden der Blattfeder 19 durch die zwei Stifte bzw. Vorsprünge 21 aus ihrer Rastposition gedrückt (s. Pfeile f in Figur 4), so dass die Blattferderenden die Rastnasen 23 beim Zusammenfalten des Windschottrahmens 2 zumindest nicht mehr in voller Höhe überbrücken müssen. Die Vorsprünge 21 werden hierbei beim Klappen des Windschottrahmens 2 auf den Abdeckungsrahmen 3 an den Schenkeln 14 vorbei zu den Blattfederenden geführt. Nachdem die Blattfeder 19 ihre Rastposition verlassen hat, können die Schenkel 14 bzw. die daran befestigten Rahmen ohne erhöhten Kraftaufwand in einfacher Weise zusammengeklappt werden, so dass die Windschotteinrichtung 1 ihr minimales Packmaß einnehmen kann. Durch die Stifte 21 wird demnach das Einklappen der Windschotteinrichtung 1 um die Klappachsen 13 des Doppelgelenks 10a erleichtert, da die Betätigungseinrichtung die Rasteinrichtung 18 aus ihrer Rastposition abhebt.

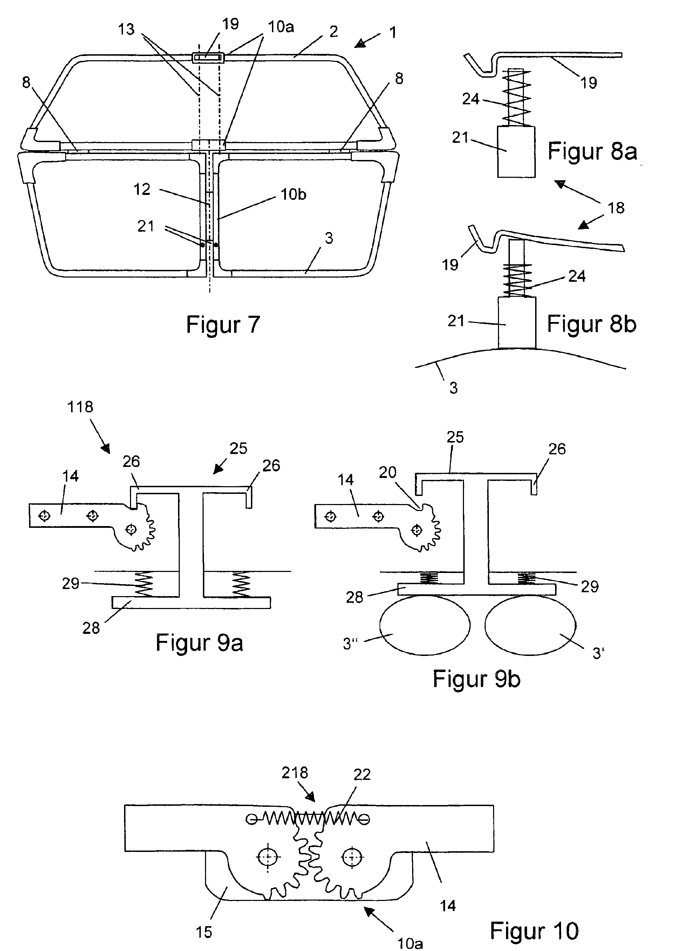

Gemäß der Figur 7 sind die vorgenannten Stifte bzw. Vorsprünge 21 (hier wieder senkrecht zur Blattebene verlaufend) benachbart an den Teilrahmen 3', 3" des Abdeckungsrahmens 3 der Blattfeder 19 gegenüber angeordnet und starr ausgebildet. Beim Falten des Windschottrahmens 2 auf den Abdeckungsrahmen 3 resultiert die in Figur 6 dargestellte Situation.

Alternativ sind die Stifte bzw. Vorsprünge 21 im Bereich des Doppelgelenks 10a angeordnet. Eine entsprechende Ausführung zeigen die Figuren 8a und 8b, wobei hier nur ein Stift bzw. Vorsprung 21 von der Seite dargestellt ist. Die Stifte 21 sind unterhalb des Doppelgelenks 10a geeignet gelagert (nicht dargestellt) und mit einer Feder 24 belastet. Beim Falten des Abdeckungsrahmens 3 auf den Windschottrahmen 2 werden die Stifte 21 gegen die Kraft der Feder 24 gegen die Enden der Feder 19 gedrückt, so dass diese abheben (Figur 8b).

Anstelle der gezeigten Blattfeder 19, welche zwischen den beweglichen Schenkeln 14 angeordnet ist, sind auch andere beliebige Rast- oder Halteeinrichtungen denkbar. Diese können auch nur an einem Schenkel 14 oder einem der Zahnräder 16 angeordnet sein, oder es können zwei separate Rasteinrichtungen an beiden Schenkeln 14 und/oder den Zahnrädern 16 vorgesehen sein.

Eine weitere Alternative zeigen die Figuren 9a und 9b. Hier umfasst die Rasteinrichtung 118 eine Klinke 25 mit zwei Klinkenarmen 26. Beide endseitigen Zinken der Klinkenarme 26 greifen in je eine Ausnehmung 20 der Schenkel 14. Die T-förmig ausgebildete Klinke 25 weist weiterhin unterseitig einen Basisschenkel 28 auf, der mittels zwei Federn 29 nach unten gedrückt wird, so dass die Klinke 25 insgesamt sich in der Raststellung (Figur 9a) befindet. Beim Zusammenklappen der Windschotteinrichtung 1 werden die beiden Teilrahmen 3', 3" des Abdeckungsrahmens 3 gegen den Basisschenkel 28 gedrückt und somit die Klinke 25 angehoben (Figur 9b). In dieser Stellung greifen die Klinkenarme 26 nicht mehr in die Ausnehmungen 20 der Schenkel 14 ein, so dass diese ebenfalls mittels des Doppelgelenks 10a verschwenkt werden können.

Figur 10 zeigt eine weitere Ausführungsform eines erfindungsgemäßen Doppelgelenks 10a mit einer Halteeinrichtung 218 für die Gebrauchsposition des Windschotts 1. Die Halteeinrichtung 218 umfasst hierbei eine Feder 22, welche vorliegend als Zugfeder ausgebildet ist. Die Feder 22 ist hierbei derart angeordnet, dass beim Aufklappen des Windschotts die Schenkel 14 zunächst gegen die Federkraft bewegt werden müssen, bis ein Punkt maximaler Federkraft überwunden ist. In der in Figur 4 dargestellten Gebrauchsposition werden die Schenkel 14 dann wiederum durch die Federkraft gehalten.

Anstelle der hier gezeigten Halte- oder Rasteinrichtungen 18, 118, 218 welche am Doppelgelenk 10a angeordnet sind, sind auch vielfältige andere Halte- oder Verriegelungseinrichtungen denkbar. Eine derartige Halte- oder Verriegelungseinrichtung kann auch an einem Rahmen 2' und 2" oder 3' und 3" der Windschotteinrichtung 1 angeordnet sein. Weiterhin kann eine derartige Halte- oder Rasteinrichtung auch für die Aufbewahrposition der Windschotteinrichtung 1 vorgesehen sein.

Um das Doppelgelenk 10a vor Verunreinigungen oder dem Einklemmen von Teilen zu schützen und das Aussehen der Windschotteinrichtung attraktiver zu gestalten, ist das Doppelgelenk 10a vorzugsweise durch eine nur in Figur 3 dargestellte Schalenanordnung aus vorzugsweise Kunststoff verdeckt bzw. eingekapselt. Diese kann nach einer bevorzugten Ausführung zweiteilig ausgebildet sein, so dass sie einfach zu montieren ist. Besonders günstig kann eine derartige Schalenanordnung ausgebildet werden, wenn das Verbindungselement 15 zugleich eine Schale des Doppelgelenks 10a bildet. Ebenso ist es jedoch auch möglich, zusätzlich eine separate Oberschale und eine Unterschale, vorzugsweise aus Kunststoff, vorzusehen.

Die Erfindung ist nicht auf die dargestellten Ausführungsbeispiele beschränkt. Abwandlungen und Kombinationen im Rahmen der Patentansprüche fallen ebenfalls unter die Erfindung.

## Patentansprüche

1. Windschotteinrichtung (1) für ein Personenkraftfahrzeug (4) mit einem Windschottrahmen (2) und einem Abdeckungsrahmen (3), welche über mindestens ein Drehgelenk (8) miteinander verbunden sind und welche jeweils aus mindestens zwei Teilrahmen (2', 2", 3', 3") bestehen, die jeweils durch mindestens ein weiteres Drehgelenk (10a, 10b) miteinander verbunden sind, wobei mindestens eines der Drehgelenke (8, 10a, 10b) als ein zwei Achsen aufweisendes Doppelgelenk (10a) mit zwei beweglichen Schenkeln (14) und einem Verbindungselement (15) zur Lagerung des Doppelgelenks (10a) ausgebildet ist, wobei die Windschotteinrichtung (1) aus einer zweifach gefalteten Aufbewahrposition in eine Gebrauchsposition und zurück klappbar ist, **dadurch gekennzeichnet, dass** das Doppelgelenk (10a) eine Synchronisiereinrichtung zum synchronisierten Klappen der beiden Schenkel (14) in die bzw. aus der Gebrauchsposition aufweist.

2. Windschotteinrichtung nach dem vorhergehenden Anspruch, **dadurch gekennzeichnet, dass** endseitig an den beweglichen Schenkeln (14) des Doppelgelenks (10a) Zahnabschnitte (11) angeordnet sind, die direkt miteinander verzahnt sind, oder dass die beweglichen Schenkel (14) des Doppelgelenks (10a) über separat gelagerte und miteinander verzahnte Zahnräder (16), insbesondere zwei Zahnräder (16), miteinander verbunden sind.

3. Windschotteinrichtung nach einem der vorhergehenden Ansprüche, **dadurch gekennzeichnet, dass** die Teilrahmen (2', 2") des Windschottrahmens (2) durch mindestens ein Doppelgelenk (10a) verbunden sind.

4. Windschotteinrichtung nach einem der vorhergehenden Ansprüche, **dadurch gekennzeichnet, dass** der Windschottrahmen (2) und der Abdeckungsrahmen (3) durch mindestens ein Doppelgelenk (10a) miteinander verbunden sind.

5. Windschotteinrichtung nach einem der vorhergehenden Ansprüche, **dadurch gekennzeichnet, dass** die beweglichen Schenkel (14) einteilig an einen Rahmen (2, 3) der Windschotteinrichtung (1) angeformt sind.

6. Windschotteinrichtung nach einem der vorhergehenden Ansprüche, **dadurch gekennzeichnet, dass** die beweglichen Schenkel (14) durch Befestigungselemente mit einem Rahmen (2, 3) der Windschotteinrichtung (1) verbunden sind.

7. Windschotteinrichtung nach einem der vorhergehenden Ansprüche, **dadurch gekennzeichnet, dass** das Doppelgelenk (10a) durch eine Schalenanordnung (30) verdeckt ist.

8. Windschotteinrichtung nach einem der vorhergehenden Ansprüche, **dadurch gekennzeichnet, dass** die Windschotteinrichtung (1) eine Halte- oder Verriegelungseinrichtung umfasst, welche in Gebrauchsposition die Rahmen (2', 2", 3', 3") relativ zueinander fixiert.

9. Windschotteinrichtung nach einem der vorhergehenden Ansprüche, **dadurch gekennzeichnet, dass** das Doppelgelenk (10a) eine Halte- oder Rasteinrichtung (18; 118; 218) zumindest für die Gebrauchsposition der Windschotteinrichtung (1) aufweist.

10. Windschotteinrichtung nach dem Anspruch 9, **dadurch gekennzeichnet, dass** die Halte- oder die Rasteinrichtung (18; 118; 218) mindestens eine Feder (19; 22) umfasst, welche zwischen den beweglichen Schenkeln (14) des Doppelgelenkes (10a) angeordnet ist.

11. Windschotteinrichtung nach dem Anspruch 10 **dadurch gekennzeichnet, dass** die Feder (19; 22) eine Blattfeder (19) umfasst, die mindestens einen Abschnitt aufweist, der in Gebrauchsposition der Windschotteinrichtung (1) in eine Ausnehmung (20) mindestens eines der Schenkel (14) oder der Zahnräder (16) aufgenommen ist, wobei die Ausnehmung (20) und/oder der besagte Abschnitt der Blattfeder (19) vorzugsweise derart geformt sind, dass beim Einklappen der Schenkel (14) die Blattfeder (19) aus ihrer Rastposition gerät.

12. Windschotteinrichtung nach dem Anspruch 9, **dadurch gekennzeichnet, dass** die Rasteinrichtung (18; 118; 218) durch eine Betätigungseinrichtung aus ihrer Rastposition abhebbar ist.

13. Windschotteinrichtung nach dem Anspruch 12, **dadurch gekennzeichnet, dass** als Betätigungseinrichtung mindestens ein bevorzugt federbelasteter Stift (21) an einem Rahmen (2, 3) angeordnet ist, welcher beim ersten Falten der Windschotteinrichtung (1) die Rasteinrichtung (18) aus ihrer Rastposition abhebt.

14. Windschotteinrichtung nach dem Anspruch 9 **dadurch gekennzeichnet, dass** die Rasteinrichtung (18; 118; 218) eine abhebbare Klinke (225) umfasst, die in Gebrauchsstellung der Windschotteinrichtung (1) in eine Ausnehmung (20) mindestens eines der Schenkel (14) oder der Zahnräder (16) eingreift.

15. Windschotteinrichtung nach dem Anspruch 14 **dadurch gekennzeichnet, dass** die bevorzugt federbelastete Klinke (25) zwei Klinkenarme (26) besitzt, die jeweils in eine besagte Ausnehmung (20) eingreifen.

## Claims

1. A wind blocking device (1) for a passenger vehicle (4) having a windblocker frame (2) and a cover frame (3) connected to each other by at least one pivot joint (8) and each consisting of two partial frames (2', 2", 3', 3") each connected to each other by means of at least one further pivot joint (10a, 10b), wherein at least one of the pivot joints (8, 10a, 10b) is implemented as a double joint (10a) comprising two axes and having two displaceable legs (14) and a connecting element (15) for supporting the double joint (10a), wherein the wind blocking device (1) can be folded out from a storage position folded twice into a use position, and back, **characterized in that** the double joint (10a) comprises a synchronizing device for folding the two legs (14) into and out of the use position in a synchronized manner.

2. The wind blocking device according to the previous claim, **characterized in that** toothed segments (11) are disposed on the ends of the displaceable legs (14) of the double joint (10a) and are directly engaged with each other, or that the displaceable legs (14) of the double joint (10a) are connected to each other by means of separately supported gear wheels (16) engaged with each other, in particular two gear wheels (16).

3. The wind blocking device according to any one of the preceding claims, **characterized in that** the partial frames (2', 2") of the windblocker frame (2) are connected by means of at least one double joint (10a).

4. The wind blocking device according to any one of the preceding claims, **characterized in that** the windblocker frame (2) and the cover frame (3) are connected to each other by means of at least one double joint (10a).

5. The wind blocking device according to any one of the preceding claims, **characterized in that** the displaceable legs (14) are formed as a single piece on a frame (2, 3) of the wind blocking device (1).

6. The wind blocking device according to any one of the preceding claims, **characterized in that** the displaceable legs (14) are connected by mounting elements to a frame (2, 3) of the wind blocking device (1).

7. The wind blocking device according to any one of the preceding claims, **characterized in that** the double joint (10a) is covered by a shell arrangement (30).

8. The wind blocking device according to any one of the preceding claims, **characterized in that** the wind blocking device (1) comprises a retaining or locking device fixing the frames (2', 2", 3', 3") relative to each other in the use position.

9. The wind blocking device according to any one of the preceding claims, **characterized in that** the double joint (10a) comprises a retaining or latching device (18; 118; 218) at least for the use position of the wind blocking device (1).

10. The wind blocking device according to claim 9, **characterized in that** the retaining or latching device (18; 118; 218) comprises at least one spring (19; 22) disposed between the displaceable legs (14) of the double joint (10a).

11. The wind blocking device according to claim 10, **characterized in that** the spring (19; 22) comprises a leaf spring (19) comprising at least one segment received in a recess (20) of at least one of the legs (14) or the gear wheels (16) in the use position of the wind blocking device (1), wherein the recess (20) and/or said segment of the leaf spring (19) are preferably formed such that the leaf spring (19) exits the latched position thereof when the legs (14) are folded in.

12. The wind blocking device according to claim 9, **characterized in that** the latching device (18; 118; 218) can be lifted from the latched position thereof by means of an actuation device.

13. The wind blocking device according to claim 12, **characterized in that** at least one preferably spring-loaded pin (21) is arranged on a frame (2, 3) as an actuating device, raising the latching device (18) from the latched position thereof when the wind blocking device (1) is first folded.

14. The wind blocking device according to claim 9, **characterized in that** the latching device (18; 118; 218) comprises a releasable catch (225) engaging in a recess (20) of at least one of the legs (14) or the gear wheels (16) in the use position of the wind blocking device (1).

15. The wind blocking device according to claim 14, **characterized in that** the preferably spring-loaded catch (25) comprises two catch arms (26) each engaging in a recess (20) as described.

## Revendications

1. Dispositif coupe-vent (1) pour une voiture particulière (4), avec un cadre de pare-vent (2) et un cadre de recouvrement (3), qui sont reliés l'un avec l'autre via au moins une articulation rotoïde (8) et qui se composent respectivement d'au moins deux cadres partiels (2', 2", 3', 3"), qui sont reliés l'un avec l'autre via au moins une articulation rotoïde supplémentaire (10a, 10b), sachant que l'une au moins des articulations rotoïdes (8, 10a, 10b) se présente sous la forme d'une double articulation (10a) présentant deux axes, avec deux bras mobiles (14) et un élément de liaison (15) pour le logement de la double articulation (10a), sachant que le dispositif coupe-vent (1) est escamotable depuis une position de rangement à double pliage vers une position d'utilisation et repliable vers la position de rangement, **caractérisé en ce que** la double articulation (10a) présente un dispositif de synchronisation pour le rabattement synchronisé des deux bras (14) vers ou depuis la position d'utilisation.

2. Dispositif coupe-vent selon la revendication précédente, **caractérisé en ce que** des sections dentées (11) sont disposées aux zones d'extrémité des bras mobiles (14) de la double articulation (10a), qui sont en prise directement l'une dans l'autre, ou **en ce que** les bras mobiles (14) de la double articulation (10a) sont reliés l'un avec l'autre via des roues dentées (16) montées séparément et en prise l'une avec l'autre, particulièrement deux roues dentées (16).

3. Dispositif coupe-vent selon l'une des revendications précédentes, **caractérisé en ce que** les cadres partiels (2', 2") du cadre de pare-vent (2) sont reliés l'un avec l'autre par au moins une double articulation (10a).

4. Dispositif coupe-vent selon l'une des revendications précédentes, **caractérisé en ce que** le cadre de pare-vent (2) et le cadre de recouvrement (3) sont reliés l'un avec l'autre par au moins une double articulation (10a).

5. Dispositif coupe-vent selon l'une des revendications précédentes, **caractérisé en ce que** les bras mobiles (14) sont formés en une pièce sur un cadre (2, 3) du dispositif coupe-vent (1).

6. Dispositif coupe-vent selon l'une des revendications précédentes, **caractérisé en ce que** les bras mobiles (14) sont reliés avec un cadre (2, 3) du dispositif coupe-vent (1) via des éléments de fixation.

7. Dispositif coupe-vent selon l'une des revendications précédentes, **caractérisé en ce que** la double articulation (10a) est cachée par un dispositif de coque (30).

8. Dispositif coupe-vent selon l'une des revendications précédentes, **caractérisé en ce que** le dispositif coupe-vent (1) comporte un dispositif d'arrêt ou de verrouillage, lequel fixe les cadres (2', 2", 3', 3") l'un par rapport à l'autre en position d'utilisation.

9. Dispositif coupe-vent selon l'une des revendications précédentes, **caractérisé en ce que** la double articulation (10a) présente un dispositif d'arrêt ou d'encliquetage (18; 118; 218), au moins pour la position d'utilisation du dispositif coupe-vent (1).

10. Dispositif coupe-vent selon la revendication 9, **caractérisé en ce que** le dispositif d'arrêt ou le dispositif d'encliquetage (18; 118; 218) comporte au moins un ressort (19; 22), qui est disposé entre les bras mobiles (14) de la double articulation (10a).

11. Dispositif coupe-vent selon la revendication 10, **caractérisé en ce que** le ressort (19; 22) comporte un ressort à lame (19), qui présente au moins une section qui, en position d'utilisation du dispositif coupe-vent (1), est logée dans un creux (20) de l'un au moins des bras (14) ou des roues dentées (16), sachant que le creux (20) et/ou ladite section du ressort à lame (19) se présente(nt) de préférence sous une forme telle que le ressort à lame (19) quitte sa position d'encliquetage lors de la rétraction des bras (14).

12. Dispositif coupe-vent selon la revendication 9, **caractérisé en ce que** le dispositif d'encliquetage (18; 118; 218) peut être soulevé de sa position d'encliquetage via un dispositif d'actionnement.

13. Dispositif coupe-vent selon la revendication 12, **caractérisé en ce qu'**une broche (21) au moins, de préférence soumise à l'action d'un ressort, est disposée en tant que dispositif d'actionnement à un cadre (2, 3), laquelle broche soulève le dispositif d'encliquetage (18) de sa position d'encliquetage lors du premier repliement du dispositif coupe-vent (1).

14. Dispositif coupe-vent selon la revendication 9, **caractérisé en ce que** le dispositif d'encliquetage (18; 118; 218) comporte un cliquet relevable (225), qui, à la position d'utilisation du dispositif coupe-vent (1), entre en prise dans un creux (20) de l'un(e) au moins des bras (14) ou des roues dentées (16).

15. Dispositif coupe-vent selon la revendication 14, **caractérisé en ce que** le cliquet (25), de préférence soumis à l'action d'un ressort, comporte deux bras de cliquet (26), qui entrent en prise respectivement dans un tel creux (20).
